# EUROPÄISCHE PATENTSCHRIFT

(11) **EP 2 808 121 B1**
(45) Veröffentlichungstag und Bekanntmachung des Hinweises auf die Patenterteilung: **09.11.2016**
(21) Anmeldenummer: 14169747.4
(22) Anmeldetag: 23.05.2014
(51) Int. Cl.: B23Q 1/00, B23Q 1/70

(54) **Motorspindel**
Motor spindle
Broche de moteur

(30) Priorität: 29.05.2013 DE 102013105565
(43) Veröffentlichungstag der Anmeldung: 03.12.2014
(73) Patentinhaber: Grob-Werke GmbH & Co. KG, 87719 Mindelheim (DE)
(72) Erfinder: Kienle, Anton, 87775 Salgen (DE); Müller, Johann, 87754 Kammlach (DE); Reiter, Armin, 86825 Bad Wörishofen (DE)
(74) Vertreter: Baumann, Rüdiger Walter

(56) Entgegenhaltungen:
- EP-A2- 1 092 499
- DE-A1- 19 532 976
- DE-U1-202012 007 020

## Beschreibung

Die Erfindung betrifft eine Motorspindel mit zumindest einem Spindelantrieb, welcher über zumindest eine Zuleitung mit Energie und/oder Betriebsstoffen versorgbar ist, sowie eine Bearbeitungsmaschine mit einer solchen Motorspindel.

Typischerweise werden werkzeugtragende Motorspindeln in Bohr-, Schleif- und Fräsmaschinen eingesetzt, die werkstücktragenden Motorspindeln sind eher bei Drehmaschinen zu finden. Neben dem Antrieb und der Lagerung der Welle zählt die Werkzeugschnittstelle zu den wichtigsten Komponenten einer modernen Motorspindel. Das Werkzeug wird automatisch gewechselt und durch ein Spannsystem fixiert. Deshalb ist die Motorspindel heutzutage die zentrale Baugruppe einer Werkzeugmaschine und maßgeblich für deren Leistung und Genauigkeit verantwortlich. Aufgrund des komplexen Aufbaus und Zusammenspiels der einzelnen Komponenten sind Motorspindeln keine Standardprodukte, sondern werden nach individuellen Anforderungen entwickelt und produziert. Entsprechend besteht das Bedürfnis, unterschiedliche Motorspindeln an ein und dergleichen Bearbeitungsmaschine abhängig vom spezifischen Arbeitsauftrag einsetzen zu können. Haupteinsatzbereiche solcher Motorspindeln sind dabei Bearbeitungszentrum und CNC-Werkzeugmaschinen aus den Bereichen der Dreh-, Schleif- und Fräsmaschinen, HSC (High-Speed-Cutting), HPC (High-Performance-Cutting), Werkzeug- und Formenbau sowie der Automobilproduktion.

DE 20 2012 007 020 U1 zeigt einen Antriebskopf, der auswechselbar ausgeführt und in verschiedenen Bearbeitungsmaschinen einsetzbar ist. Die Anschlüsse für Strom und Betriebsstoffe sind an verschiedenen Stellen der Rückseite des Antriebskopfes angebracht. Es ist umständlich bei einem Wechsel des Antriebskopfes diese unterschiedlichen Anschlüsse einzeln zu verbinden bzw. zu trennen.

DE 195 32 976 A1 offenbart einen Antrieb von Motorspindel, der die komplette, für den Antrieb nötige Steuerung im gleichen Gehäuse wie die Motorspindel unterbringt. An der Rückseite der Motorspindel müssen beim Einbau verschiedene Anschlüsse manuell erfolgen, was aufwändig ist.

EP 1 092 499 A2 zeigt einen Kopf für eine Bearbeitungsmaschine, bei dem verschiedene Strom- und andere Versorgungsanschlüsse beim Verbinden des Kopfes mit der Bearbeitungsmaschine automatisch geschlossen werden. Die Anschlüsse sind dabei an massiven und aufwändigen Bauteilen der Maschine befestigt, so dass eine Anpassbarkeit der Schnittstelle zwischen Kopf und Bearbeitungsmaschine kaum möglich ist.Es ist Aufgabe der vorliegenden Erfindung, die Austauschbarkeit einer Motorspindel an einer Bearbeitungsmaschine zu verbessern.

Diese Aufgabe wird durch eine erfindungsgemäße Motorspindel mit zumindest einem Spindelantrieb gelöst, welcher über zumindest eine Zuleitung mit Energie und/oder Betriebsstoffen versorgbar ist, mit einer Multikupplung mit einem ersten und zweiten Kupplungselement, wobei ein festinstalliertes erstes Kupplungselement einer Multikupplung, an dessen Anschlüssen die Zuleitungen zum Übertragen von Energie und/oder Betriebsstoffen angeschlossen sind, an der Motorspindel oder dem Spindelantrieb vorgesehen ist und das zweite Kupplungselement der Multikupplung, an dem jeweils komplementäre Anschlüsse zum Übertragen von Energie und/oder Betriebsstoffen angeordnet sind, an einer Bearbeitungsmaschine angeordnet ist.

Die erfindungsgemäße Motorspindel zeichnet sich dadurch aus, dass ist es vorgesehen, dass das erste Kupplungselement an einer Motorspindelrückseite, insbesondere an dem Motorspindelgehäuse oder einem separaten Träger der Motorspindel fest installiert ist. Damit werden insbesondere Beschädigungen des spindelseitigen Kupplungselements ausgeschlossen und im Zusammenwirken mit dem zweiten Kupplungsteil eine plug-and-play-Lösung geschaffen, die eine besonders einfache Montage oder einen besonders einfachen Austausch der Motorspindel an der Bearbeitungsmaschine ermöglichen.

Ein wesentlicher Punkt der erfindungsgemäßen Motorspindel besteht dabei in der besonders einfachen Kopplung aller benötigten Zuleitungen, die in einem einzigen Arbeitsgang miteinander verbindbar (und auch lösbar) sind. Dadurch entsteht eine besonders gut handhabbare Motorspindel, die sowohl auftrags- wie auch wartungsbedingt einfach austauschbar ist. Da alle erforderlichen Zuleitungen gemeinsam angeschlossen werden, entsteht zudem ein besonders sicheres und zuverlässiges System. Darüberhinaus ist eine Motorspindel mit einem derart festinstallierten ersten Kupplungselement einer Multikupplung besonders einfach und kostengünstig herstellbar. Gleichzeitig bleibt die üblicherweise verlangte Präzision einer solchen Motorspindel unangetastet.

Die vorstehend genannte Aufgabe wird auch durch eine erfindungsgemäße Bearbeitungsmaschine mit einer derartigen Motorspindel gelöst, wobei die Bearbeitungsmaschine ein zweites Kupplungselement der Multikupplung aufweist, an dem jeweils komplementäre Anschlüsse zum Übertragen von Energie und/oder Betriebsstoffen angeordnet sind.

Ein wesentlicher Punkt der erfindungsgemäßen Bearbeitungsmaschine besteht dabei darin, dass diese anforderungsgemäß unterschiedliche Motorspindeln aufnehmen kann, ohne dass umfangreichere Montage- und Installationsarbeiten anfallen. Damit kann diese Bearbeitungsmaschine sehr flexibel und effizient genutzt werden, also für die Bearbeitung unterschiedlichster Werkstücke eingesetzt werden. Da die Anschlüsse zum Übertragen aller Arten von Medien ausgelegt sind, ist zudem eine zuverlässige und sichere Versorgung jeder Art von Motorspindel mit Energie und/oder Betriebsstoffen gewährleistet.

Der geringere Rüstaufwand beim Wechseln der Motorspindel ist nicht nur beim Wechseln der Motorspindeltyps, zum Beispiel weil eine Motorspindel mit anderen Parametern (Drehzahl, Spannbereich des Werkzeuges, etc.) benötigt wird, von Vorteil. Auch im Falle eines Ausfalls der Motorspindel reduziert der erfindungsgemäße Vorschlag die Stillstandzeiten erheblich, da die erfindungsgemäß ausgestattete Motorspindel deutlich schneller aus- und eingebaut ist, und die erfindungsgemäße Bearbeitungsmaschine somit schneller wieder für Bearbeitungsaufgaben zur Verfügung steht.

Bei der erfindungsgemäßen Motorspindel ist es dabei vorgesehen, dass das erste und/oder zweite Kupplungselement ein plattenförmiges Trägerelement aufweist, von dem sich die Anschlüsse senkrecht wegerstrecken. Damit ist eine besonders einfache Halterung genauso wie ein verklemmungsfreies Einstecken der komplementären Anschlüsse gewährleistet, die zudem eine hohe Anschlussdichte aufweisen können und somit eine besonders kleine und kompakte Bauform zulassen. Insgesamt entsteht dadurch eine besonders gute Handhabbarkeit der Motorspindel bei ihrer Wartung oder bei ihrem Austausch.

In einer bevorzugten Ausführungsform der Motorspindel oder der Bearbeitungsmaschine ist vorgesehen, dass die Anschlüsse zum Übertragen von Antriebs- und/oder Kühl- und/oder Schmiermitteln ausgebildet oder mit Luftleitungen, zum Beispiel für Blasluft oder Sperrluft verbunden oder verbindbar sind.

In einer weiteren Ausführungsform der Motorspindel oder der Bearbeitungsmaschine ist vorgesehen, dass die komplementären Anschlüsse als jeweilige Stecker- und Buchsenkombination ausgebildet sind. Damit ergibt sich eine besonders hohe Verbindungssicherheit zwischen beiden Kupplungselementen, was zu einem besonders zuverlässigen Betrieb der gewarteten oder ausgetauschten Motorspindel beiträgt.

In einer weiteren günstigen Ausführungsform der Motorspindel oder der Bearbeitungsmaschine ist es vorgesehen, dass die Stecker einer jeweiligen Stecker- und Buchsenkombination an dem ersten Kupplungselement angeordnet sind. Das erste und damit spindelseitige Kupplungselement kann damit in einfacher Weise an der Bearbeitungsmaschine angesteckt werden, womit ein besonders leichter Wechsel der Motorspindel ermöglicht wird.

In einer weiteren vorteilhaften Ausführungsform der Motorspindel oder der Bearbeitungsmaschine ist es vorgesehen, dass die Buchsen einer jeweiligen Stecker- und Buchsenkombination an dem zweiten Kupplungselement angeordnet sind. Das zweite und damit maschinenseitige Kupplungselement unterliegt dadurch weniger leichten Beschädigungen von Steckern an diesem Kupplungselement, welche die Einsatzfähigkeit der Bearbeitungsmaschine selbst beeinträchtigen könnten.

In beiden vorstehend genannten Fällen einer jeweiligen Stecker- und Buchsenkombination an dem ersten beziehungsweise zweiten Kupplungselement wird somit eine hohe Einsatzfähigkeit und Zuverlässigkeit, sowohl der Motorspindel als auch der Bearbeitungsmaschine und natürlich deren Kombination, sichergestellt.

In einer weiteren als vorteilhaft angesehenen Ausführungsform der Motorspindel oder der Bearbeitungsmaschine ist es vorgesehen, dass das erste Kupplungselement sowohl Stecker wie auch Buchsen aufweist, die zur Leitung von Energie und/oder Betriebsstoffen mit den jeweiligen Anschlüssen verbunden ist/sind. In einer entsprechenden Mischung von Steckern und Buchsen an dem ersten, also dem spindelseitigen Kupplungselement wird damit eine besonders zuverlässige Führung gewährleistet, wenn die Motorspindel an der Bearbeitungsmaschine eingesteckt wird.

In einer weiteren bevorzugten Ausführungsform der Motorspindel oder der Bearbeitungsmaschine ist es vorgesehen, dass das erste und/oder zweite Kupplungselement wenigstens ein Befestigungselement zum lösbaren Verbinden dieses Kupplungselements mit einem weiteren Bauteil, insbesondere mit einer Trägerplatte aufweist. Das besagte Befestigungselement kann dabei als Clip- oder Schraubverbindung ausgeführt sein oder aus der Trägerplatte selbst bestehen, die eine geführte Kopplung und Justierung beider Kupplungselemente gegeneinander erlaubt. Damit entsteht eine besonders gute Handhabbarkeit der Verbindung, welche darüberhinaus auch einen besonders zuverlässigen und sicheren Anschluss garantiert.

In einer bevorzugten Ausführungsform der Motorspindel oder der Bearbeitungsmaschine ist es vorgesehen, dass wenigstens ein Befestigungselement in einem Randbereich des ersten und/oder zweiten Kupplungselements angeordnet ist. Damit ist insbesondere eine platzsparende Anbringung dieses Befestigungselements sichergestellt, welche die Anschlussdichte der entsprechenden Kupplungselemente nicht beeinträchtigt.

In einer als günstig erachteten Ausführungsform der Motorspindel oder der Bearbeitungsmaschine ist es vorgesehen, dass das erste und/oder zweite Kupplungselement wenigstens ein Befestigungselement zum lösbaren Verbinden beider Kupplungselemente aneinander aufweist. Damit ist insbesondere kein weiteres Bauteil mehr erforderlich, welches zum gegenseitigen Festlegen beider Kupplungselemente vorgesehen werden müsste, wodurch die Befestigung der Kupplungselemente aneinander besonders einfach und kostengünstig ausführbar ist. Zudem entsteht eine hohe Sicherheit und Zuverlässigkeit durch die einfache konstruktive Auslegung dieser Verbindung.

In einer weiteren als vorteilhaft angesehenen Ausführungsform der Motorspindel oder der erfindungsgemäßen Bearbeitungsmaschine ist es vorgesehen, dass wenigstens ein Befestigungselement zum lösbaren Verbinden des ersten und/oder zweiten Kupplungselements in wenigstens einen Anschluss integriert ist. Dadurch entsteht eine noch platzsparendere Befestigungsmöglichkeit, das insbesondere dadurch realisiert werden kann, dass wenigstens einige Anschlüsse mit einer entsprechenden Clip- und/oder Schraubsicherung ausgestattet sind, welche komplementäre Anschlüsse leicht handhabbar ineinander einrasten und/oder gegeneinander verschrauben lässt.

In einer bevorzugten Ausführungsform der Motorspindel oder der Bearbeitungsmaschine ist es vorgesehen, dass wenigstens ein Befestigungselement als Schrauben- und Mutterverbindung an dem ersten und zweiten Kupplungselement ausgebildet ist. Diese Art der Befestigung stellt dabei eine besonders einfache Festlegung beider Kupplungselemente gegeneinander dar, die zum Beispiel als flanschartige Verschraubung ausgelegt sein kann. Durch die einfache Zugänglichkeit der Schrauben- und Mutterverbindung entsteht darüberhinaus auch eine gute Handhabbarkeit der erfindungsgemäßen Motorspindel an der Bearbeitungsmaschine.

In einer weiteren günstigen Ausführungsform der Motorspindel oder der Bearbeitungsmaschine ist es vorgesehen, dass die Schrauben- und Mutterverbindung ungefähr in der Mitte von dem ersten und/oder zweiten Kupplungselement angeordnet ist. Eine solchermaßen angeordnete zentrale Verbindung ist besonders zuverlässig, da eine gleichmäßige Kraftverteilung über alle komplementären Anschlüsse beider Kupplungselemente sichergestellt ist.

In einer weiteren vorteilhaften Ausführungsform der Motorspindel oder der Bearbeitungsmaschine ist es vorgesehen, dass das zweite Kupplungselement mit der Zuleitung einer Energiekette der Werkzeugmaschine verbunden oder verbindbar ist. Das zweite, also das maschinenseitige Kupplungselement, ist damit frei beweglich, was einen Wechsel der Motorspindel besonders vereinfacht.

In einer weiteren günstigen Ausführungsform der Motorspindel oder der Bearbeitungsmaschine ist es vorgesehen, dass das erste Kupplungselement an einer im Übrigen frei beweglichen Zuleitung fest installiert ist. Auch dadurch wird eine besonders einfache Montage oder ein besonders einfacher Austausch der Motorspindel an der Bearbeitungsmaschine ermöglicht, da das erste, also das spindelseitige Kupplungselement, ähnlich einem Stecker an einem Kabel frei bewegt werden kann.

Die Erfindung betrifft auch eine mit einer wie zuvor beschriebenen Motorspindel ausgestaltete Bearbeitungsmaschine.

In einer Ausführungsform der Bearbeitungsmaschine ist es vorgesehen, dass das zweite Kupplungselement an einem separaten Träger der Bearbeitungsmaschine fest installiert ist. Auch dadurch ergibt sich eine möglichst beschädigungsfreie Halterung des zweiten, also des maschinenseitigen Kupplungselements, das ebenfalls in Form einer plug-and-play-Lösung genutzt werden kann.

In einer weiteren Ausführungsform der Bearbeitungsmaschine ist es vorgesehen, dass für die Aufnahme der Motorspindel an der Bearbeitungsmaschine mindestens eine Einschubschiene vorgesehen ist, wobei das Einschieben der Motorspindel auf der Einschubschiene auch die beiden Kupplungselemente zur Leitung von Energie und/oder Betriebsstoffen leitend in Verbindung treten. Damit ist eine ruckartige Führung der Motorspindel an der Einschubschiene möglich, die eine potentielle Beschädigung von komplementären Anschlüssen durch Verkanten der Motorspindel gegen die Bearbeitungsmaschine ausschließt, womit sowohl die Handhabbarkeit der Motorspindel bei Austausch oder Wartung, wie auch deren zuverlässige Verbindung, mit der Bearbeitungsmaschine sichergestellt ist.

In der Zeichnung ist die Erfindung insbesondere in einem Ausführungsbeispiel schematisch dargestellt. Es zeigen:
- Fig. 1: eine längsgeschnittene Seitenansicht einer erfindungsgemäßen Motorspindel mit einem Spindelantrieb, die über eine Multikupplung und eine Energiekette mit einer Bearbeitungsmaschine verbunden ist;
- Fig. 2: eine Draufsicht auf die Motorspindel der Fig. 1 in etwas vergrößerten Maßstab mit einem geschlossenen Gehäuse und freiliegender Multikupplung;
- Fig. 3: eine seitliche Ansicht des ersten und des zweiten Kupplungselements der Multikupplung der Fig. 1 und 2, und
- Fig. 4: eine perspektivische Draufsicht von schräg oben auf die zwei Kupplungselemente der Multikupplung der Fig. 3.

In den Figuren sind gleiche oder einander entsprechende Elemente jeweils mit den gleichen Bezugszeichen bezeichnet und werden daher, sofern nicht zweckmäßig, nicht erneut beschrieben.

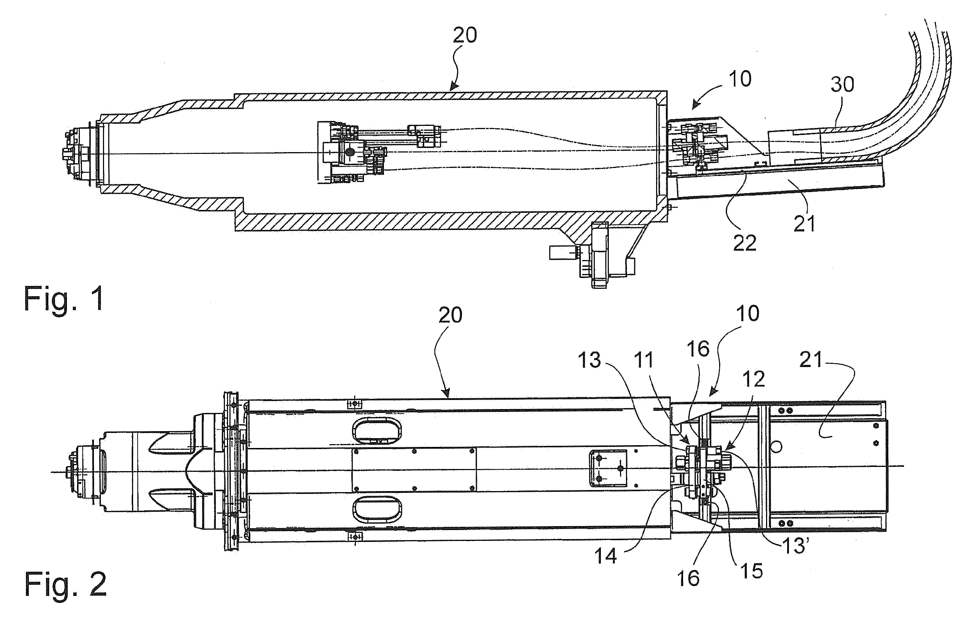

**Fig. 1** zeigt eine längsgeschnittene Seitenansicht einer erfindungsgemäßen Motorspindel 20 mit einem Spindelantrieb, das über eine Multikupplung 10 und eine Energiekette 30 mit einer Bearbeitungsmaschine (nicht gezeigt) verbunden ist. An die Motorspindel 20 schließt eine Trägerplatte 21 an, die eine Einschubschiene 22 trägt, an der die Energiekette 30 und eine Multikupplung 10 gegeneinander verfahren werden können. Die Multikupplung 10 selbst ist dabei am linken Ende der Einschubschiene 22 angeordnet und stellt eine Verbindung zwischen maschinenseitigen Zuleitungen zum Übertragen von Energie und/oder Betriebsstoffen an die Motorspindel 20 her, deren Übertragungsweg hier strichliert dargestellt ist.

**Fig. 2** zeigt eine Draufsicht auf die Motorspindel 20 der Fig. 1 in etwas vergrößertem Maßstab mit einem geschlossenen Gehäuse und freiliegender Multikupplung 10, deren erstes und zweites Kupplungselement 11, 12 über komplementäre Anschlüsse 13, 13' für Energie und/oder Betriebsstoffe miteinander verbunden sind. Über diese Anschlüsse 13, 13' (aus Übersichtsgründen ist nur ein komplementäres Stecker- und Buchsenpaar mit diesen Bezugsziffern versehen) werden der Motorspindel 20 Energie und/oder Betriebsstoffe maschinenseitig zur Verfügung gestellt, die zum Beispiel eine Stromversorgung, eine Schmierstoff- und Kühlwasserversorgung, eine Blasluft- oder Sperrluftversorgung und so weiter umfassen. Alle Anschlüsse 13, 13' sind dabei einander gegenüberliegend an entsprechenden Trägerelementen 14, 15 angeordnet, womit eine hohe Integrationsdichte der Anschlüsse 13, 13' an der Multikupplung 10 ermöglicht wird. Im Randbereich des maschinenseitigen Trägerelements 15 sind dabei Befestigungselemente 16 von dem Kupplungselement 12 an die Trägerplatte 21 vorgesehen.

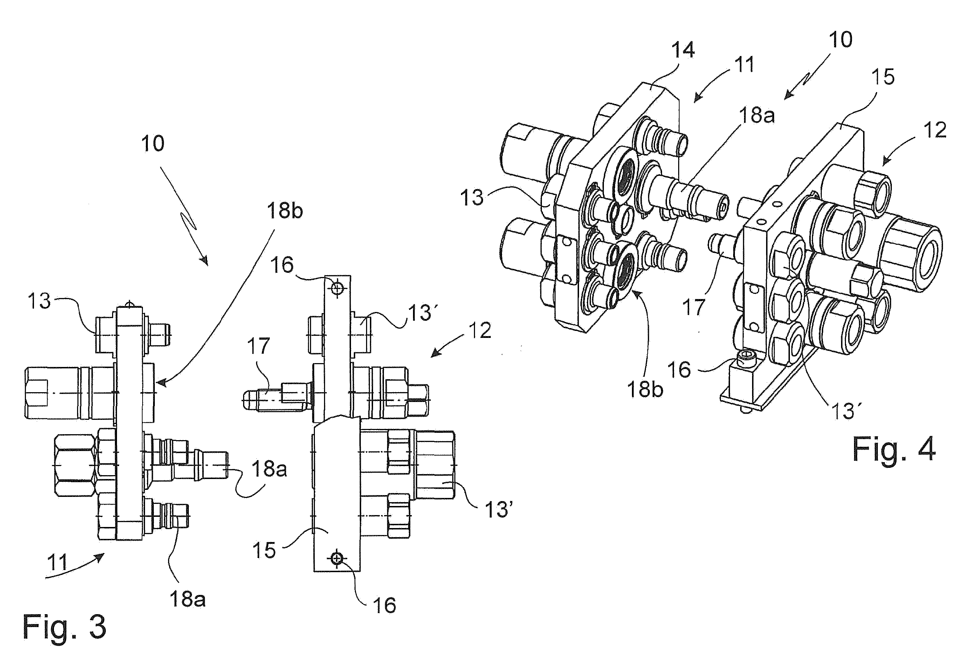

**Fig. 3** zeigt eine seitliche Ansicht des ersten und zweiten Kupplungselements 11, 12, der Multikupplung 10 der Fig. 1 und 2, das über ein entsprechendes Befestigungselement 17, die hier als zentral an dem maschinenseitigen Trägerelement 15 angebrachte Schraube ausgebildet ist, lösbar miteinander verbunden werden können. Durch Anziehen dieser Schraube in einem komplementär dazu in dem spindelseitigen Trägerelement 14 angebrachten Gewinde werden alle Energie- und/oder Betriebsstoffanschlüsse 13, 13' gleichmäßig gegeneinander angezogen und sicher, sowie zuverlässig miteinander verbunden. An dem spindelseitigen Kupplungselement 11 sind die Anschlüsse 13 dabei sowohl als Stecker 18a wie auch als Buchsen 18b ausgebildet, mit entsprechend komplementär an dem Kupplungselement 12 liegenden Gegenstücken. Damit wird eine besonders gute Führung beider Kupplungselemente 11, 12 beim Wechsel oder Austausch der Motorspindel 20 gewährleistet. Die Befestigungselemente 16 an dem maschinenseitigen Kupplungselement 12 sind dabei im Randbereich des Trägerelements 15 angeordnet und als entsprechende Bohrungen zur Aufnahme von Befestigungsschrauben ausgelegt. Dadurch bleibt eine hohe Integrationsdichte der Anschlüsse 13' an dem Trägerelement 15 bei gleichzeitig definierter Lage des maschinenseitigen Kupplungselements 12 gewährleistet.

**Fig. 4** zeigt eine perspektivische Draufsicht von schräg oben auf die Kupplungselemente 11, 12 der Multikupplung 10 der Fig. 3. In dieser Figur wird insbesondere die hohe Anzahl der Anschlüsse 13, 13' an den beiden Trägerelementen 14, 15 deutlich, die eine umfassende maschinenseitige Versorgung der Motorspindel 20 zulassen. Über das maschinenseitig liegende Befestigungselement 17 lassen sich beide Kupplungselemente 11, 12 einfach miteinander verbinden, sodass eine sichere und zuverlässige Versorgung mit Energie und/oder Betriebsstoffen über die Anschlüsse 13, 13' gewährleistet ist. Mit Hilfe der Befestigungselemente 16 wird das maschinenseitige Trägerelement 15 über Schrauben an der Trägerplatte 21 befestigt, um eine definierte Lage und Stabilität dieses Trägerelements 15 gegenüber dem Trägerelement 14 der Motorspindel 20 zu bieten, wenn diese zum Beispiel aus Wartungs- oder Auftragsgründen entnommen oder ausgetauscht werden muss. Insgesamt wird dadurch die Handhabbarkeit der Motorspindel 20 deutlich verbessert, ohne deren üblicherweise gewünschte Funktionalität einzuschränken.

## Patentansprüche

1. Motorspindel mit zumindest einem Spindelantrieb, welcher über mindestens eine Zuleitung mit Energie und/oder Betriebsstoffen versorgbar ist, umfassend eine Multikupplung (10) mit einem ersten und einem zweiten Kupplungselement, wobei das erste Kupplungselement (11), an dessen Anschlüssen (13) die Zuleitungen zum Übertragen von Energie und/oder Betriebsstoffen angeschlossen sind, festinstalliert an der Motorspindel und/oder dem Spindelantrieb vorgesehen ist und das zweite Kupplungselement der Multikupplung (10), an dem jeweils komplementäre Anschlüsse (13') zum Übertragen von Energie und/oder Betriebsstoffen angeordnet sind, an einer Bearbeitungsmaschine angeordnet ist und das erste Kupplungselement an einer Motorspindelrückseite angeordnet ist **dadurch gekennzeichnet, dass** das erste und zweite Kupplungselement (11, 12) ein plattenförmiges Trägerelement (14, 15) aufweist, von dem sich die Anschlüsse (13, 13') senkrecht weg erstrecken.

2. Motorspindel nach Anspruch 1, **dadurch gekennzeichnet, dass** die Anschlüsse (13, 13') zum Übertragen von Antriebs und/oder Kühl- und/oder Schmiermitteln ausgebildet oder mit Luftleitungen, zum Beispiel als Blasluft oder Sperrluft verbunden oder verbindbar sind.

3. Motorspindel nach Anspruch 1 oder 2, **dadurch gekennzeichnet, dass** die komplementären Anschlüsse (13, 13') als jeweilige Stecker- und Buchsenkombination ausgebildet sind und/oder die Stecker (18a) einer jeweiligen Stecker- und Buchsenkombination an dem ersten Kupplungselement (11) angeordnet sind und/oder die Buchsen (18b) einer jeweiligen Stecker- und Buchsenkombination an dem zweiten Kupplungselement (12) angeordnet sind.

4. Motorspindel nach einem der vorherstehenden Ansprüche, **dadurch gekennzeichnet, dass** das erste Kupplungselement (11) sowohl Stecker (18a) wie auch Buchsen (18b) aufweist, die zur Leitung von Energie und/oder Betriebsstoffen mit den jeweiligen Anschlüssen (13, 13') verbunden ist/sind und/oder das erste und/oder zweite Kupplungselement (11, 12) wenigstens ein Befestigungselement (16) zum lösbaren Verbinden des Kupplungselements (11, 12) mit einem weiteren Bauteil, insbesondere mit einer Trägerplatte (21) aufweist.

5. Motorspindel nach Anspruch 4, **dadurch gekennzeichnet, dass** wenigstens eine Befestigungselement (16) in einem Randbereich des ersten und/oder zweiten Kupplungselements (11, 12) angeordnet ist.

6. Motorspindel nach Anspruch 4 oder 5, **dadurch gekennzeichnet, dass** das erste und/oder zweite Kupplungselement (11, 12) wenigstens ein Befestigungselement (17) zum lösbaren Verbinden beider Kupplungselemente (11, 12) aneinander aufweist.

7. Motorspindel nach einem der Ansprüche 4 bis 6, **dadurch gekennzeichnet, dass** das wenigstens eine Befestigungselement (17) zum lösbaren Verbinden des ersten und/oder zweiten Kupplungselements (11, 12) in wenigstens einen Anschluss (13, 13') integriert ist und/oder das wenigstens ein Befestigungselement (17) als Schrauben- und Mutterverbindung an dem ersten und dem zweiten Kupplungselement (11, 12) ausgebildet ist.

8. Motorspindel nach der Ansprüche 4 bis 7, **dadurch gekennzeichnet, dass** die Schrauben- und Mutterverbindung ungefähr in der Mitte von dem ersten und/oder zweiten Kupplungselement (11, 12) angeordnet ist und/oder das zweite Kupplungselement (12) mit der Zuleitung einer Energiekette (30) der Werkzeugmaschine verbunden oder verbindbar ist.

9. Motorspindel nach einem der vorstehenden Ansprüche, **dadurch gekennzeichnet, dass** das erste Kupplungselement (11) an einer im Übrigen frei beweglichen Zuleitung an dem Motorspindelgehäuse oder einem separaten Träger der Motorspindel fest installiert ist.

10. Bearbeitungsmaschine mit einer Motorspindel gemäß einem der Ansprüche 1 bis 9, **dadurch gekennzeichnet, dass** das zweite Kupplungselement (12) an einem separaten Träger der Bearbeitungsmaschine fest installiert ist.

11. Bearbeitungsmaschine nach Anspruch 10, **dadurch gekennzeichnet, dass** für die Aufnahme der Motorspindel (20) an der Bearbeitungsmaschine mindestens eine Einschubschiene (22) vorgesehen ist, wobei durch das Einschieben der Motorspindel (20) auf der Einschubschiene (22) auch die beiden Kupplungselemente (11, 12) zur Leitung von Energie und/oder Betriebsstoffen leitend in Verbindung treten.

## Claims

1. Motor spindle with at least one spindle drive that can be supplied via at least one feed line with energy and/or operating supplies, comprising a multi coupling (10) with a first and a second coupling element, wherein the first coupling element (11), the ports (13) of which are connected to the feed lines for transmitting energy and/or operating supplies, is provided fixedly installed at the motor spindle and/or the spindle drive, and the second coupling element of the multi coupling (10), where respective complementary ports (13') for transmitting energy and/or operating supplies are arranged, is arranged at a machine tool, and the first coupling element is arranged at a backside of a motor spindle, **characterized in that** the first and the second coupling element (11, 12) has a plate-shaped support element (14, 15) from which the ports (13, 13') extend perpendicularly.

2. Motor spindle according to claim 1, **characterized in that** the ports (13, 13') are designed for transmitting the drive and/or coolants and/or lubricants, or are or can be connected with air ducts, for example as blow air or sealing air.

3. Motor spindle according to claims 1 or 2, **characterized in that** the complementary ports (13, 13') are designed as respective plug and socket connection, and/or the plugs (18a) of a respective plug and socket combination are arranged at the first coupling element (11), and/or the sockets (18b) of a respective plug and socket combination are arranged at the second coupling element (12).

4. Motor spindle according to one of the preceding claims, **characterized in that** the first coupling element (11) is provided with plugs (18a) as well as sockets (18b) connected with the respective ports (13, 13') for transmitting energy and/or operating supplies, and/or the first and/or the second coupling element (11, 12) is provided with at least one fastening element (16) for the detachable connection of the coupling element (11, 12) with another component, in particular a carrier plate (21).

5. Motor spindle according to claim 4, **characterized in that** at least one fastening element (16) is arranged in a peripheral zone of the first and/or second coupling element (11, 12).

6. Motor spindle according to claims 4 or 5, **characterized in that** the first and/or second coupling element (11, 12) has at least one fastening element (17) for the detachable connection of both coupling elements (11, 12) to one another.

7. Motor spindle according to one of the claims 4 to 6, **characterized in that** the at least one fastening element (17) for the detachable connection of the first and/or second coupling element (11, 12) is integrated in at least one port (13, 13'), and/or the at least one fastening element (17) is configured as screw and nut connection at the first and the second coupling element (11, 12) coupling element.

8. Motor spindle according to one of the claims 4 to 7, **characterized in that** the screw and nut connection is arranged roughly in the middle of the first and/or second coupling element (11, 12), and/or the second coupling element (12) is or can be connected with the feed line of an energy chain (30) of the machine tool.

9. Motor spindle according to one of the preceding claims, **characterized in that** the first coupling element (11) is fixedly installed at an otherwise freely accessible feed line at the motor spindle housing or a separate support of the motor spindle.

10. Machine tool with a motor spindle according to one of the claims 1 to 9, **characterized in that** the second coupling element (12) is fixedly installed at a separate support of the machine tool.

11. Machine tool according to claim 10, **characterized in that** for receiving the motor spindle (20) at the machine tool at least one slide in-rail (22) is provided, wherein by sliding the motor spindle (20) on the slide in-rail (22) also the two coupling elements (11, 12) for conducting energy and/or operative supplies are connected conductively.

## Revendications

1. Broche de moteur comportant au moins une commande de broche, pouvant être alimentée en énergie et/ou en produits de fonctionnement via au moins une conduite, avec un couplage multiple (10) comportant un premier et un deuxième éléments de couplage, avec le premier élément de couplage, dont les raccords (13) comportent des connexions d'alimentation et de transfert d'énergie, installé de façon fixe au niveau de la broche de moteur et/ou au niveau de la commande de broche et avec le deuxième élément de couplage du couplage multiple (10), connecté au niveau des raccords complémentaires (13') pour le transfert d'énergie et/ou de produits de fonctionnement, situé au niveau d'une machine d'usinage, et avec le premier élément de couplage situé sur la face arrière de la broche de moteur, **caractérisée en ce que** le premier et le deuxième éléments de couplage(11, 12) comportent un élément de support plat (14, 15) duquel partent les raccords (13, 13') à angle droit.

2. Broche de moteur selon la revendication 1, **caractérisée en ce que** les raccords (13, 13') sont configurés pour le transfert de produits de commande, de refroidissement et/ou de lubrifiants ou qu'ils sont ou peuvent être connectés aux conduites d'air, par exemple d'air servant à un mécanisme de blocage ou à souffler.

3. Broche de moteur selon la revendication 1 ou 2, **caractérisé en ce que** les raccords complémentaires (13, 13') sont chacun configurés comme un raccord mâle-femelle et/ou **en ce que** les connecteurs mâles (18a) de chaque combinaison de raccords mâle-femelle sont situés au niveau du premier élément de couplage (11) et/ou **en ce que** les connecteurs femelles (18b) de chacune des combinaisons de raccords mâle-femelle sont situés au niveau du deuxième élément de couplage (12).

4. Broche de moteur selon l'une des revendications précédentes, **caractérisée en ce que** le premier élément de couplage (11) comporte aussi bien des connecteurs mâles (18a) que des connecteurs femelles (18b) servant à transférer de l'énergie et/ou des produits de fonctionnement via le(s) raccord(s) (13, 13') et/ou **en ce que** le premier et/ou le deuxième élément de couplage (11, 12) possède au moins un élément de fixation (16) pour créer un lien amovible de l'élément de couplage (11, 12) avec un autre élément et en particulier avec une plaque de support (21).

5. Broche de moteur selon la revendication 4, **caractérisée en ce qu'**au moins un élément de fixation (16) est situé dans une zone de bord du premier et/ou du deuxième élément de couplage (11, 12).

6. Broche de moteur selon la revendication 4 ou 5, **caractérisée en ce que** le premier et/ou le deuxième élément de couplage (11, 12) comporte au moins un élément de fixation (17) destiné à créer un lien amovible entre les deux éléments de couplage (11, 12).

7. Broche de moteur selon une des revendications 4 à 6, **caractérisé en ce qu'**au moins un élément de fixation (17) pour l'interconnexion amovible du premier et/ou du deuxième élément de couplage (11, 12) est intégré en au moins un raccord (13, 13') et/ou **en ce qu'**au moins un élément de fixation (17) est configuré en tant que raccord à vis et écrou au niveau du premier et du deuxième élément de couplage (11, 12).

8. Broche de moteur selon les revendications 4 à 7, **caractérisée en ce que** le raccord à vis et écrou est situé approximativement au milieu du premier et/ou du deuxième élément de couplage (11, 12) et/ou **en ce que** le deuxième élément de couplage (12) est ou peut être connecté à la conduite de la chaîne d'alimentation d'énergie (30) de la machine d'usinage.

9. Broche de moteur selon une des revendications précédentes, **caractérisée en ce que** le premier élément de couplage (11) est raccordé de façon fixe à une conduite d'alimentation mobile, située au niveau du châssis de la broche de moteur ou au niveau d'un support séparé de la broche de moteur.

10. Machine d'usinage avec une broche de moteur selon une des revendications 1 à 9, **caractérisée en ce que** le deuxième élément de couplage (12) est fixé à un support séparé de la machine d'usinage.

11. Machine d'usinage selon la revendication 10, **caractérisée en ce qu'**au moins un rail mobile (22) est prévu au niveau de la machine d'usinage permettant de recevoir la broche de moteur (20) de façon à ce que l'introduction de la broche de moteur (20) au niveau du rail mobile (22) permet d'interconnecter également les deux éléments de couplage (11, 12), créant ainsi une conduite destinée au transfert d'énergie et/ou de produits de fonctionnement.
